(19) Europäisches Patentamt
European Patent Office
Office européen des brevets

(11) **EP 3 130 638 B1**

(12) **EUROPEAN PATENT SPECIFICATION**

(45) Date of publication and mention
of the grant of the patent:
**26.12.2018 Bulletin 2018/52**

(51) Int Cl.:
***C08K 3/04*** *(2006.01)*      ***C08F 293/00*** *(2006.01)*
***H01B 1/04*** *(2006.01)*      ***H01B 1/24*** *(2006.01)*

(21) Application number: **15775975.4**

(86) International application number:
**PCT/JP2015/057622**

(22) Date of filing: **16.03.2015**

(87) International publication number:
**WO 2015/156087 (15.10.2015 Gazette 2015/41)**

(54) **COMPOSITION**

ZUSAMMENSETZUNG

COMPOSITION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.04.2014 JP 2014081545**

(43) Date of publication of application:
**15.02.2017 Bulletin 2017/07**

(73) Proprietor: **Nippon Mektron Ltd.
Tokyo 105-8585 (JP)**

(72) Inventors:
• **TAKAHASHI, Katsuei
Tsukuba-shi
Ibaraki
3050841 (JP)**
• **CHIKUGO, Naoki
Tsukuba-shi
Ibaraki
3050841 (JP)**
• **MATSUURA, Mikiya
Tsukuba-shi
Ibaraki
3050841 (JP)**
• **SHACHI, Kenji
Tsukuba-shi
Ibaraki
3050841 (JP)**
• **MAEKAWA, Kazuhiko
Tsukuba-shi
Ibaraki
3050841 (JP)**

(74) Representative: **Vossius & Partner
Patentanwälte Rechtsanwälte mbB
Siebertstrasse 3
81675 München (DE)**

(56) References cited:
**EP-A1- 2 620 482      JP-A- 2009 046 562
JP-A- 2011 153 214      JP-A- 2012 069 416**

**Description**

Technical Field

The present invention relates to a composition. More specifically, the present invention relates to a composition useful for production of electrode films in a sensor formed by sandwiching a polymer electrolyte film between the electrode films.

Background Art

In recent years, there is an increased demand for lightweight flexible transducers that convert certain kinds of energies to other kinds of energies such as actuators and sensors, in the fields of medical devices, micromachines, and the like. Also in the fields of industrial robots, personal robots, and the like, there is an increased demand for lightweight flexible transducers.

Among the lightweight flexible transducers that are increasingly demanded in such a wide range of fields, polymer transducers are drawing attention, and a variety of types of polymer transducers have been reported.

For example, polymer transducers having a flexible laminate formed by sandwiching a polymer electrolyte film between electrode films are known to be useful as sensors for measuring deformation and/or displacement (hereinafter simply referred to as "sensor"). In such sensors, deformation of the laminate occurs due to deformation or displacement of the object to be measured, and this causes the sensors to output an electric signal. As the material for forming the electrode films contained in the sensor, an electrode-forming paste containing a particular solid polymer electrolyte, a conducting particle, and a solvent is known (see Patent Document 1). By forming the electrode-forming paste into a film, and then removing the solvent, the electrode film can be obtained.

From the viewpoint of, for example, increasing the versatility of the sensors and improving their measurement accuracies, further enhancement of the intensity of the electric signal (signal intensity) that is output upon the deformation has been demanded.

PRIOR ART DOCUMENTS

Patent Documents

Patent Document

Patent Document 1: JP 2012-69416 A

[SUMMARY OF THE INVENTION]

Problems to be Solved by the Invention

An object of the present invention is to provide a material for electrode films that can increase the signal intensities of the sensors described above.

Means for Solving the Problems

In order to achieve this object, the present invention provides a composition comprising: a diblock polymer (A) having a structure in which, in a diblock polymer ($A_0$) having no ion-conducting group composed of a polymer block ($S_0$) containing a structural unit derived from an aromatic vinyl compound having a number average molecular weight of not less than 20,000 (hereinafter simply referred to as "polymer block ($S_0$)") and an amorphous polymer block (T) containing a structural unit derived from an unsaturated aliphatic hydrocarbon (hereinafter simply referred to as "polymer block (T)"), an ion-conducting group(s) is/are introduced to the polymer block ($S_0$) (hereinafter simply referred to as "diblock polymer (A)"); a hydrocarbon solvent (B); an organic solvent (C) having at least one functional group selected from the group consisting of hydroxyl, carbonyl, alkoxycarbonyl, and amide (hereinafter simply referred to as "organic solvent (C)"); and a conductive filler (D).

Effect of the Invention

The composition of the present invention can be used for production of an electrode film. Sensors formed by sandwiching a polymer electrolyte film between two sheets of such an electrode film can output a high signal intensity.

[BRIEF DESCRIPTION OF THE DRAWINGS]

Fig. 1 is a diagram showing the result of a performance test for a sensor having electrode films produced using the composition obtained in Example 1.

Fig. 2 is a diagram showing the result of a performance test for a sensor having electrode films produced using the composition obtained in Example 2.

Fig. 3 is a diagram showing the result of a performance test for a sensor having electrode films produced using the composition obtained in Comparative Example 2.

[MODE FOR CARRYING OUT THE INVENTION]

The composition of the present invention contains a diblock polymer (A), a hydrocarbon solvent (B), an organic solvent (C), and a conductive filler (D). When the contents of the diblock polymer (A), the hydrocarbon solvent (B), the organic solvent (C), and the conductive filler (D) in the composition of the present invention (mass fractions (% by mass) in the composition) are represented as $W_A$, $W_B$, $W_C$, and $W_D$, respectively, $W_A$ is preferably within the range of 2 to 50% by mass; $W_B$ is preferably within the range of 10 to 70% by mass; $W_C$ is preferably within the range of 20 to 80% by mass; and $W_D$ is preferably within the range of 0.5 to 20% by mass. From the viewpoint of the productivity of the composition of the present invention and ease of handling of the composition, $W_A$ is more preferably within the range of 10 to 30% by mass; $W_B$ is more preferably within the range of 20 to 30% by mass; $W_C$ is more preferably within the range of 40 to 60% by mass; and $W_D$ is more preferably within the range of 1 to 15% by mass.

$W_A$:$W_D$ is preferably within the range of 98:2 to 50:50. From the viewpoint of increasing the signal intensity of the sensor having electrode films produced using the composition of the present invention, $W_A$:$W_D$ is more preferably within the range of 95:5 to 75:25.

$W_B$:$W_C$ is preferably within the range of 5:95 to 95:5. From the viewpoint of increasing the homogeneity of the composition of the present invention, $W_B$:$W_C$ is more preferably within the range of 20:80 to 70:30.

The value of $W_A+W_D$ is preferably within the range of 4 to 55% by mass. From the viewpoint of ease of handling of the composition of the present invention, the value of $W_A+W_D$ is more preferably within the range of 15 to 35% by mass.

[Diblock Polymer (A)]

The diblock polymer (A) contained in the composition of the present invention has a structure in which, in a diblock polymer ($A_0$) having no ion-conducting group composed of a polymer block ($S_0$) and a polymer block (T), an ion-conducting group(s) is/are introduced to the polymer block ($S_0$). The polymer block having the structure in which the ion-conducting group(s) is/are introduced to the polymer block ($S_0$) is hereinafter referred to as "polymer block (S)".

The polymer block (S) is a polymer block which contains a structural unit derived from an aromatic vinyl compound, and has an ion-conducting group. The polymer block (S) is formed by introduction of an ion-conducting group(s) to the polymer block ($S_0$).

Examples of the aromatic vinyl compound that can form the polymer block ($S_0$) include styrene, $\alpha$-methylstyrene, $o$-methylstyrene, $m$-methylstyrene, $p$-methylstyrene, and 1,1-diphenylethylene. Among these, from the viewpoint of industrial availability, productivity of the diblock polymer (A), and the like, styrene and $\alpha$-methylstyrene are preferred. These aromatic vinyl compounds may be used individually, or two or more of these may be used in combination. The content of the structural unit(s) derived from the aromatic vinyl compound(s) is preferably not less than 90% by mass, more preferably not less than 95% by mass with respect to the polymer block ($S_0$). The content may also be 100% by mass.

The polymer block ($S_0$) may also contain another structural unit derived from a compound other than aromatic vinyl compounds, as long as the effect of the present invention is not deteriorated. Examples of the another compound include alkenes having 2 to 8 carbon atoms, such as ethylene, propylene, 1-butene, 2-butene, isobutene, 1-pentene, 2-pentene, 1-hexene, 2-hexene, 1-heptene, 2-heptene, 1-octene, and 2-octene; conjugated dienes having 4 to 8 carbon atoms, such as butadiene, 1,3-pentadiene, isoprene, 1,3-hexadiene, 2,4-hexadiene, 2,3-dimethyl-1,3-butadiene, 2-ethyl-1,3-butadiene, and 1,3-heptadiene; (meth)acrylates such as methyl (meth)acrylate, ethyl (meth)acrylate, and butyl (meth)acrylate; vinyl esters such as vinyl acetate, vinyl propionate, vinyl butyrate, and vinyl pivalate; and vinyl ethers such as methyl vinyl ether and isobutyl vinyl ether. These other compounds may be used individually, or two or more of these may be used in combination. The total content of the above-described other structural units is preferably not more than 10% by mass, more preferably not more than 5% by mass with respect to the amount of the polymer block ($S_0$).

The polymer block ($S_0$) can be produced by polymerizing the aromatic vinyl compound described above and, if necessary, the another/other compound(s) which is/are an arbitrary component(s), as monomers. In cases where two or more kinds of monomers are used in combination to perform the polymerization, a monomer mixture prepared by mixing the two or more kinds of monomers together is usually subjected to the polymerization to produce the polymer block ($S_0$).

The number average molecular weight (Mn) of the polymer block ($S_0$) in the diblock polymer (A) is not less than 20,000, preferably within the range of 25,000 to 60,000, more preferably within the range of 30,000 to 50,000. In the present description, Mn represents a value in terms of standard polystyrene as measured by gel permeation chromatography (GPC). Since Mn of the polymer block ($S_0$) is not less than 20,000, electrode films produced using the composition of the present invention have excellent shape stability against the pressing force, and a sensor using such electrode films hardly causes short-circuit between the two electrode films due to their deformation.

Examples of the ion-conducting group to be introduced to the polymer block ($S_0$) include a carboxylic acid group, sulfonic acid group, and phosphonic acid group. From the viewpoint of increasing the signal intensity of the sensor having electrode films produced with the composition of the present invention, the ion-conducting group is preferably a sulfonic acid group.

The content of the ion-conducting groups with respect to the structural units derived from the aromatic vinyl compound constituting the polymer block (S) is preferably within the range of 10 to 100 mol% from the viewpoint of increasing the signal intensity of the sensor having electrode films produced with the composition of the present invention, more preferably within the range of 25 to 80 mol% from the viewpoint of productivity of the diblock polymer (A). The content is still more preferably within the range of 40 to 70 mol%.

The polymer block (T) is an amorphous polymer block containing a structural unit derived from an unsaturated aliphatic hydrocarbon. The "amorphous" herein means that, in measurement of the dynamic visco-elasticity of the polymer, there is no change in the storage elastic modulus derived from crystalline polyolefin. Such a polymer block (T) preferably does not contain an ion-conducting group.

The unsaturated aliphatic hydrocarbon that can form the polymer block (T) is preferably a chain unsaturated aliphatic hydrocarbon having a polymerizable carbon-carbon double bond, such as alkenes having 2 to 8 carbon atoms, including ethylene, propylene, 1-butene, 2-butene, isobutene, 1-pentene, 2-pentene, 1-hexene, 2-hexene, 1-heptene, 2-heptene, 1-octene, and 2-octene; and conjugated dienes having 4 to 8 carbon atoms, including butadiene, 1,3-pentadiene, isoprene, 1,3-hexadiene, 2,4-hexadiene, 2,3-dimethyl-1,3-butadiene, 2-ethyl-1,3-butadiene, and 1,3-heptadiene. Isobutene, butadiene, and isoprene are more preferred. These unsaturated aliphatic hydrocarbons may be used individually, or two or more of these may be used in combination. The content of the structural units derived from the unsaturated aliphatic hydrocarbon(s) is preferably not less than 90% by mass, more preferably not less than 95% by mass with respect to the polymer block (T). The content may also be 100% by mass.

The polymer block (T) may also contain another structural unit derived from a compound other than unsaturated aliphatic hydrocarbons, as long as the effect of the present invention is not deteriorated. Examples of the another compound include aromatic vinyl compounds such as styrene and vinyl naphthalene; halogen-containing vinyl compounds such as vinyl chloride; vinyl esters such as vinyl acetate, vinyl propionate, vinyl butyrate, and vinyl pivalate; and vinyl ethers such as methylvinyl ether and isobutyl vinyl ether. These other compounds may be used individually, or two or more of these may be used in combination. The total content of the above-described other structural units is preferably not more than 10% by mass, more preferably not more than 5% by mass with respect to the polymer block (T).

The polymer block (T) can be produced by polymerizing the unsaturated aliphatic hydrocarbon described above and, if necessary, the another/other compound(s) which is/are an arbitrary component(s), as monomers. In cases where two or more kinds of monomers are used in combination to perform the polymerization, a monomer mixture prepared by mixing the two or more kinds of monomers together is usually subjected to the polymerization to produce the polymer block (T). In cases where such an unsaturated aliphatic hydrocarbon has a plurality of polymerizable carbon-carbon double bonds, any of these may be used for the polymerization. For example, in cases where the unsaturated aliphatic hydrocarbon is a conjugated diene, the bond may be 1,2-bond, 3,4-bond, or 1,4-bond, or a mixture of two or more of these.

In cases where the unsaturated aliphatic hydrocarbon forming the polymer block (T) has a plurality of carbon-carbon double bonds, carbon-carbon double bonds usually remain after the polymerization. In such a case, part or all of the remaining carbon-carbon double bonds may be converted to saturated bonds by a known hydrogenation reaction to provide the polymer block (T). The hydrogenation rate of the carbon-carbon double bonds is preferably not less than 50 mol%, more preferably not less than 80 mol%, still more preferably not less than 95 mol%. The hydrogenation rate can be calculated by $^1$H-NMR measurement.

Mn of the polymer block (T) is preferably within the range of 30,000 to 280,000, more preferably within the range of 50,000 to 170,000.

The glass transition temperature of the polymer block (T) is preferably not more than 25°C. From the viewpoint of increasing the flexibility at low temperature, the glass transition temperature is more preferably not more than 0°C, still more preferably not more than -30°C.

Mn of the diblock polymer ($A_0$) is preferably within the range of 55,000 to 340,000, more preferably within the range of 80,000 to 220,000.

The content of the polymer block ($S_0$) in the diblock polymer ($A_0$) is preferably within the range of 20 to 70% by mass, more preferably within the range of 30 to 50% by mass.

In cases where the content is not less than 20% by mass, electrode films produced using the composition of the present invention have excellent shape stability against the pressing force, and a sensor using such electrode films hardly causes short-circuit between the two electrode films due to their deformation. In cases where the content is not more than 70% by mass, electrode films produced using the composition of the present invention have excellent flexibility, so that the electrode films are suitable for sensors.

The content of the polymer block (T) in the diblock polymer ($A_0$) is preferably within the range of 30 to 80% by mass, more preferably within the range of 50 to 70% by mass.

In cases where the content is not less than 30% by mass, electrode films produced using the composition of the present invention have excellent flexibility, so that the electrode films are suitable for sensors. In cases where the content is not more than 80% by mass, electrode films produced using the composition of the present invention have excellent shape stability against the pressing force, so that a sensor using such electrode films hardly causes short-circuit between the two electrode films due to their deformation.

The number of equivalents of the ion-conducting group (ion exchange capacity) per unit mass of the diblock polymer (A) is preferably within the range of 0.1 to 2.0 meq/g, more preferably within the range of 0.5 to 1.5 meq/g.

The diblock polymer (A) may be used individually, or two or more of these may be used in combination.

(Method for Producing Diblock Polymer (A))

The method for producing the diblock polymer ($A_0$) to be used as a raw material of the diblock polymer (A) may be appropriately selected from, for example, radical polymerization, anionic polymerization, cationic polymerization, and coordination polymerization, depending on the types of the monomers constituting the polymer block ($S_0$) and the polymer block (T), and/or the like. Industrially, the method is preferably radical polymerization, anionic polymerization, or cationic polymerization. From the viewpoint of easy control of the molecular weight and the molecular weight distribution, living radical polymerization, living anionic polymerization, and living cationic polymerization are more preferred.

In cases where styrene is used as the aromatic vinyl compound, and a conjugated diene such as butadiene or isoprene is used as the unsaturated aliphatic hydrocarbon, specific examples of the method for producing the diblock polymer ($A_0$) include a method in which an anionic polymerization initiator is added to a nonpolar solvent such as cyclohexane, and styrene is then added thereto to carry out living anionic polymerization, thereby forming the polymer block ($S_0$), followed by adding a conjugated diene thereto to further carry out living anionic polymerization, thereby forming the polymer block (T).

In cases where styrene is used as the aromatic vinyl compound, and isobutene is used as the unsaturated aliphatic hydrocarbon, specific examples of the method for producing the diblock polymer ($A_0$) include a method in which a cationic polymerization initiator and a Lewis acid are added to a mixed solvent of a halogenated hydrocarbon and a hydrocarbon, and isobutene is then added thereto to carry out living cationic polymerization, thereby forming the polymer block (T), followed by adding styrene thereto to carry out living cationic polymerization, thereby forming the polymer block ($S_0$) (see Macromol. Chem., Macromol. Symp., vol. 32, issue 119 (1990)).

As the method for introducing the ion-conducting group to the obtained diblock polymer ($A_0$), a known method can be used. Examples of a method for introducing a sulfonic acid group as the ion-conducting group, and a method for introducing a phosphonic acid group ($-P(O)(OH)_2$) as the ion-conducting group, are described below.

Examples of the method for introducing a sulfonic acid group to the diblock polymer ($A_0$) include a method in which the diblock polymer ($A_0$) is reacted with a sulfonating agent.

Examples of the sulfonating agent include sulfuric acid; mixtures of sulfuric acid and an aliphatic acid anhydride; chlorosulfonic acid; mixtures of chlorosulfonic acid and trimethylsilyl chloride; sulfur trioxide; mixtures of sulfur trioxide and triethyl phosphate; and aromatic organic sulfonic acids such as 2,4,6-trimethylbenzene sulfonic acid.

In this reaction, the diblock polymer ($A_0$) may be preliminarily mixed with an organic solvent to provide a solution or a suspension, and the sulfonating agent may then be added thereto.

Examples of the method for introducing a phosphonic acid group to the diblock polymer ($A_0$) include a method in which anhydrous aluminum chloride and chloromethyl ether are added to a solution or a suspension prepared with the diblock polymer ($A_0$) and an organic solvent, to introduce a halomethyl group to the aromatic ring of the diblock polymer ($A_0$), and phosphorous trichloride and anhydrous aluminum chloride are then added thereto to allow the reaction to proceed, followed by carrying out hydrolysis reaction; and a method in which phosphorous trichloride and anhydrous aluminum chloride are added to a solution or a suspension prepared with the diblock polymer ($A_0$) and an organic solvent, to introduce a phosphinic acid group ($-PH(O)(OH)$) to the aromatic ring of the diblock polymer ($A_0$), and nitric acid is then added thereto to allow oxidation of the phosphinic acid group.

[Hydrocarbon Solvent (B)]

The hydrocarbon solvent (B) contained in the composition of the present invention means a hydrocarbon which is in the liquid state at 25°C. From the viewpoint of ease of handling of the composition of the present invention and productivity in production of the electrode films, the boiling point of the hydrocarbon solvent (B) under atmospheric pressure is preferably 50 to 280°C, more preferably 100 to 220°C.

Examples of the hydrocarbon solvent (B) include aliphatic hydrocarbons such as octane, nonane, decane, undecane, decene, undecene, α-terpinene, and β-terpinene; and aromatic hydrocarbons such as toluene, o-xylene, m-xylene, p-xylene, cumene, o-cymene, m-cymene, p-cymene, o-diethylbenzene, m-diethylbenzene, p-diethylbenzene, o-diisopropylbenzene, m-diisopropylbenzene, and p-diisopropylbenzene. Among these, aromatic hydrocarbons are preferred. o-Diisopropylbenzene, m-diisopropylbenzene, and p-diisopropylbenzene are more preferred. These hydrocarbon solvents (B) may be used individually, or two or more of these may be used in combination.

[Organic Solvent (C)]

The organic solvent (C) contained in the composition of the present invention means an organic compound having at least one functional group selected from the group consisting of hydroxyl, carbonyl, alkoxycarbonyl, and amide, which organic compound is in the liquid state at 25°C. From the viewpoint of ease of handling of the composition of the present invention and productivity in production of the electrode films, the boiling point of the organic solvent (C) under atmospheric pressure is preferably 50 to 280°C, more preferably 100 to 220°C.

Examples of the organic solvent (C) include monohydric and polyhydric alcohols such as 1-hexanol, 1-octanol, 2-octanol, 3-octanol, cyclohexanol, benzyl alcohol, arid ethylene glycol; glycol ethers such as ethylene glycol monomethyl ether, ethylene glycol monoethyl ether, ethylene glycol monobutyl ether, diethylene glycol monomethyl ether, diethylene glycol monoethyl ether, and diethylene glycol monobutyl ether; glycol ether esters such as diethylene glycol monomethyl ether acetate, diethylene glycol monoethyl ether acetate, and diethylene glycol monobutyl ether acetate; ketones such as isophorone, cyclohexanone, 2-octanone, and 3-octanone; and amides such as N-methylpyrrolidone, formamide, and dimethylformamide. Among these, ethylene glycol monobutyl ether, benzyl alcohol, and 1-hexanol are preferred. These organic solvents (C) may be used individually, or two or more of these may be used in combination.

By use of the hydrocarbon solvent (B) and the organic solvent (C) in combination, dissolution of the block polymer (A) can be easily achieved.

[Conductive Filler (D)]

The conductive filler (D) contained in the composition of the present invention is not limited as long as it has electrical conductivity, and examples of the conductive filler (D) include metals such as gold, silver, copper, platinum, aluminum, and nickel; metal compounds such as ruthenium oxide ($RuO_2$), titanium oxide ($TiO_2$), tin oxide ($SnO_2$), iridium dioxide ($IrO_2$), tantalum oxide ($Ta_2O_5$), indium-tin composite oxide (ITO), and zinc sulfide (ZnS); conductive carbons such as carbon black, carbon nanotubes including single-walled carbon nanotubes (SWCNT), double-walled carbon nanotubes (DWCNT), and multi-walled carbon nanotubes (MWCNT), and vapor-grown carbon fibers (VGCF); and conductive polymers such as polyacetylene, polypyrrole, polythiophene, and derivatives thereof. Among these, conductive carbons are preferred from the viewpoint of availability, and carbon black is more preferred. These conductive fillers (D) may be used individually, or two or more of these may be used in combination.

The average primary particle size of the conductive filler (D) is preferably 1 nm to 1 μm, more preferably 10 to 500 nm. The average primary particle size can be determined by averaging the primary particle sizes of the conductive filler (D) observed under the electron microscope. In cases where the conductive filler (D) is a non-spherical filler such as a carbon nanotube or a vapor-grown carbon fiber, the primary particle size means the short diameter.

[Other components]

The composition of the present invention may also contain a component other than the diblock polymer (A), the hydrocarbon solvent (B), the organic solvent (C), and the conductive filler (D) (another component). The another component is preferably a compound other than the hydrocarbon solvent (B) and the organic solvent (C), which compound is in the liquid state at 25°C and has a boiling point of preferably 50 to 280°C, more preferably 100 to 220°C under atmospheric pressure (another solvent). Examples of the another component include water; and ethers having none of the functional groups hydroxyl, carbonyl, alkoxycarbonyl, and amide, such as ethylene glycol dimethyl ether, diethylene glycol dimethyl ether, and tetrahydrofuran. In cases where the composition contains one or more of such other solvents, the content of the solvent(s) is preferably not more than 10% by mass, more preferably not more than 5% by mass, with respect to the total content of the hydrocarbon solvent (B) and the organic solvent (C).

The composition of the present invention may further contain, if necessary, one or more of components other than those described above, such as glass beads; resin beads composed of polystyrene, acrylic resin, polyolefin, and/or the like; silicone powders; and calcium carbonate; in an amount of preferably not more than 5% by mass, more preferably not more than 3% by mass, with respect to the content of the diblock polymer (A).

[Electrode Film]

By forming the composition of the present invention into a film, and then removing the hydrocarbon solvent (B), the organic solvent (C), and the another/other solvent(s) which is/are an arbitrary component(s), the electrode film can be produced.

Examples of the method for forming the composition of the present invention into a film include a method in which the composition is applied to a surface of a base material or the like. The method of application of the composition is not limited, and examples of the method include spraying, dipping, bar-coating, doctor blading, letterpress printing, intaglio printing, lithographic printing, ink jet method, and screen printing. From the viewpoint of workability, screen printing is preferred. The method of removal of the hydrocarbon solvent (B) and the organic solvent (C) after the formation is not limited. The removal is usually carried out at 20 to 120°C at a pressure of 0.1 kPa to normal pressure (101 kPa) for 1 to 3 hours.

The thickness of the electrode film is preferably within the range of 1 $\mu$m to 10 mm, more preferably within the range of 5 $\mu$m to 1 mm, still more preferably within the range of 10 to 500 $\mu$m.

[Sensor]

The sensor having electrode films obtained from the. composition of the present invention as described above is described below.

The sensor having electrode films described above usually contains a laminate in which a polymer electrolyte film as well as at least a pair of electrode films that are independent of, and insulated from, each other are provided. That is, the laminate is formed by sandwiching the polymer electrolyte film between the pair of electrode films. Deformation or displacement of the laminate causes a difference in the electric potential between the electrode films that are insulated from each other, and the deformation or the displacement can be detected as an electric signal.

Additionally, a pair of collecting electrodes may be provided outside the pair of electrode films. Examples of the collecting electrodes include metal foils and metal thin films of gold, silver, copper, platinum, aluminum, or the like; film-shaped molded products composed of a metal powder (gold powder, silver powder, nickel powder, or the like) or a carbon fine powder (carbon powder, carbon nanotube, carbon fiber, or the like) and a binder resin; and products prepared by forming a metal thin film on a cloth such as a fabric, paper, or non-woven fabric, or on a polymer film or the like, by a method such as sputtering or plating. In particular, from the viewpoint of flexibility, film-shaped molded products composed of a metal powder and a binder resin, and products prepared by forming a metal thin film on a cloth, polymer film, or the like are preferred.

The thickness of the collecting electrode is preferably 1 $\mu$m to 10 mm, more preferably 5 $\mu$m to 100 $\mu$m, still more preferably 10 to 50 $\mu$m.

Additionally, a pair of protection layers may be provided outside the pair of collecting electrodes. Examples of the protection layers that may be used include polyethylene terephthalate films, polyethylene naphthalate films, polyolefin films, polyurethane films, polyvinyl chloride films, and elastomer films.

From the viewpoint of ease of handling during the production and the strength of the protection layer, the thickness of the protection layer is preferably 1 $\mu$m to 10 mm, more preferably 10 $\mu$m to 1 mm, still more preferably 30 to 500 $\mu$m.

Examples of the method for producing the sensor include:

a method in which the composition of the present invention is applied /dried on one side of a film-shaped polymer electrolyte film to form an electrode film, thereby preparing a laminate of the polymer electrolyte film and the electrode film, followed by attaching two sheets of the laminate together by heat press or the like such that their polymer electrolyte film sides face each other, and then, if necessary, forming collecting electrodes and/or protection layers; a method in which the composition of the present invention is applied/dried on both sides of a film-shaped polymer electrolyte film to form electrode films, followed by, if necessary, forming collecting electrodes and/or protection layers; a method in which a collecting electrode is formed, if necessary, on a film base material which is a protection layer, and the composition of the present invention is then applied/dried thereon to form an electrode film, followed by applying/drying a solution or a dispersion containing a component constituting a polymer electrolyte film on the electrode film to form the polymer electrolyte film, applying/drying the composition of the present invention thereon to form an electrode film, and then forming, if necessary, a collecting electrode and/or a protection layer; and

a method in which a collecting electrode is formed, if necessary, on a film base material which is a protection layer, and the composition of the present invention is then applied/dried thereon to form an electrode film, followed by applying/drying a solution or a dispersion containing a component constituting a polymer electrolyte film on the electrode film to form the polymer electrolyte film, thereby preparing a laminate containing the polymer electrolyte film, the electrode film, and the protection layer, and then attaching two sheets of the laminate together by heat press or the like such that their polymer electrolyte film sides face each other.

For example, as the solution or the dispersion containing a component constituting the polymer electrolyte film, a solution or a dispersion of a block polymer composed of the polymer block (S) and the polymer block (T) may be used. Examples of the block polymer include diblock polymers and triblock polymers. The block polymer is preferably a triblock polymer in which polymer block (S) - polymer block (T) - polymer block (S) are linked to each other in this order.

The thickness of the polymer electrolyte film is preferably 1 μm to 10 mm, more preferably 5 μm to 1 mm, still more preferably 10 to 500 μm.

Such a sensor can operate in water, in vacuum, in an organic solvent, and/or the like. Depending on the use environment, the sensor may be sealed. Examples of the sealing material include, but are not limited to, various resins.

[EXAMPLES]

The present invention is described below more concretely by way of Examples and Comparative Examples.

[Amorphous Nature of Polymer Block (T)]

The block polymer to be subjected to the measurement (diblock polymer (A-1), diblock polymer (A-2), diblock polymer (A'-1), or triblock polymer (E-1)), toluene, and 2-propanol were mixed together to prepare a solution. The solution was applied to a PET film that was subjected to mold release treatment, and the solution was then dried, to obtain a film having a thickness of 30 μm. The storage elastic modulus of the film was measured using a wide-range dynamic viscoelasticity measuring device ("DVE-V4FT Rheospectrer", manufactured by Rheology Co., Ltd.) under the following conditions: tension mode (frequency, 11 Hz); temperature increase from -80°C to 250°C at a heating rate of 3°C/minute. As a result, no change in the storage elastic modulus at 80 to 100°C, which is derived by crystalline polyolefin, was found in any of the above cases. Accordingly, the polymer block containing a structural unit derived from an unsaturated aliphatic hydrocarbon (polymer block (T)) in each block polymer subjected to the measurement was judged to be amorphous.

[Molecular Weight, and Molecular Weight Distribution]

The peak top molecular weight (Mt), Mn, the weight average molecular weight (Mw), and the molecular weight distribution (Mw/Mn) were determined in terms of those measured for standard polystyrene using GPC (gel permeation chromatography apparatus, HLC-8220GPC (manufactured by Tosoh Corporation); column, TSK-gel Super Multipore HZ-M (manufactured by Tosoh Corporation; column diameter, 4.6 mm; column length, 15 cm); column temperature, 40°C; eluent, tetrahydrofuran; eluent flow rate, 0.35 mL/minute).

[Ion Exchange Capacity]

The block polymer to be subjected to the measurement (diblock polymer (A-1), diblock polymer (A-2), diblock polymer (A'-1), or triblock polymer (E-1)) was weighed (weighed value, a (g)), and dissolved in 100 masses of tetrahydrofuran to prepare a solution. To this solution, an excess amount of saturated aqueous sodium chloride solution ((300 to 500) × a (mL)) was added, and the resulting mixture was stirred in a closed system for 12 hours.

Using phenolphthalein as an indicator, hydrogen chloride generated in the water was subjected to neutralization titration (titration volume, b (mL)) using 0.01 N standard aqueous sodium hydroxide solution (titer, f).

From the above results, the ion exchange capacity was calculated according to the following equation.

$$\text{Ion exchange capacity (meq/g)} = (0.01 \times b \times f) / a$$

[$^1$H-NMR] Measurement by $^1$H-NMR was carried out under the following conditions.

$^1$H-NMR system: JNM-ECX400, manufactured by JEOL Ltd.
Solvent: deuterated chloroform

Base peak: tetramethylsilane

(Production Example 1)

(1) Production of Diblock Polymer ($A_0$-1))

The atmosphere in a pressure vessel equipped with a stirrer was replaced with nitrogen, and 184 g of styrene and 2.03 kg of cyclohexane were placed in the vessel, followed by stirring and mixing the mixture. To this mixture, 4.2 mL of a sec-butyllithium solution (solution in 1.3 M cyclohexane) was added, and the resulting mixture was stirred at 60°C for 1 hour to perform polymerization reaction, thereby forming a polymer block ($S_0$). The reaction liquid was sampled, and Mn of the polymer block ($S_0$) was measured. As a result, Mn was 34,200, and the polymerization conversion rate of styrene as determined by gas chromatography was 100%. Subsequently, 335 g of isoprene was added to this reaction liquid, and the resulting mixture was stirred for 2 hours to perform further polymerization reaction, followed by adding 1.1 mL of methanol thereto to stop the polymerization reaction. By this, a mixture containing a diblock polymer of a polymer block composed of polystyrene and a polymer block composed of polyisoprene was obtained. The mixture was sampled, and the content of the polymer block ($S_0$) in the polymer was calculated from the $^1$H-NMR spectrum. As a result, the content was 35% by mass.

To the resulting mixture, palladium carbon (amount of palladium carried: 5% by mass) was added as a hydrogenation catalyst. The resulting mixture was stirred at a hydrogen pressure of 2 MPa at 150°C for 5 hours to allow hydrogenation reaction. The reaction mixture was then allowed to cool, and the pressure was released. Palladium carbon was removed by filtration, and the solvent was removed from the filtrate, followed by drying the resulting product, to obtain a diblock polymer ($A_0$) (hereinafter referred to as diblock polymer ($A_0$-1)) of a polymer block composed of polystyrene (polymer block $S_0$) and a polymer block composed of hydrogenated polyisoprene (polymer block (T)). The obtained diblock polymer ($A_0$-1) was subjected to GPC measurement. The results were as follows: Mt=136,000, Mn=132,000, Mw=135,000, and Mw/Mn=1.02. The hydrogenation rate calculated from the $^1$H-NMR spectrum was 97.2%.

(2) Production of Diblock Polymer (A-1)

Subsequently, a solution of the diblock polymer ($A_0$-1) in toluene was prepared. After carrying out washing with water and reprecipitation in methanol, the resulting precipitate was dried to purify the diblock polymer ($A_0$-1). In a glass reaction vessel equipped with a stirrer wherein the atmosphere in the system was replaced with nitrogen, 200 g of the purified diblock polymer ($A_0$-1) and 2868 L of methylene chloride were placed, and the resulting mixture was stirred to provide a solution. Thereafter, 34.59 mL of acetic anhydride was added thereto, and then 15.47 mL of concentrated sulfuric acid was added dropwise thereto while the liquid temperature in the reaction vessel was kept at 25 to 30°C. The resulting mixture was stirred at 25°C for 20 hours, and 2868 L of distilled water was added thereto to allow precipitation of solids, followed by separating the solids by filtration. To the solids, 1000 mL of distilled water was added, and the resulting mixture was stirred/washed at 25°C for 30 minutes, followed by separation by filtration. This operation of stirring/washing and separation by filtration was repeated until no pH change was found in the filtrate, and the solids separated by the filtration were dried to obtain a diblock polymer (A) (hereinafter referred to as diblock polymer (A-1)). The rate of introduction of sulfonic acid groups to the structural unit derived from styrene in the diblock polymer (A-1) (sulfonation rate) as calculated from the $^1$H-NMR spectrum was 33 mol%. The ion exchange capacity was 1.1 meq/g.

(Production Example 2)

(1) Production of Diblock Polymer ($A_0$-2))

In a pressure vessel equipped with a stirrer whose atmosphere was replaced with nitrogen, 116 g of $\alpha$-methylstyrene, 162.4 g of cyclohexane, 17.9 g of methylcyclohexane, and 3.8 g of tetrahydrofuran were placed, and the resulting mixture was mixed by stirring. To this mixture, 2.4 mL of a sec-butyllithium solution (solution in 1.3 M cyclohexane) was added, and the resulting mixture was stirred at -10°C for 3 hours to perform polymerization reaction. The reaction liquid was sampled, and Mn of the polymer was measured. As a result, Mn was 34,000, and the polymerization conversion rate of $\alpha$-methylstyrene as determined by gas chromatography was 90.5%. Subsequently, 10g of butadiene was added to this reaction liquid, and the resulting mixture was stirred for 30 minutes at -10°C to perform further polymerization reaction, followed by adding 1280 g of cyclohexane thereto. Subsequently, 185 g of butadiene was added to the mixture, and polymerization reaction was carried out at 50°C for 2 hours with stirring. Thereafter, 0.6 mL of methanol was added thereto to stop the polymerization reaction. By this, a mixture containing a diblock polymer of a polymer block composed of poly($\alpha$-methylstyrene) and a polymer block composed of polybutadiene was obtained. The mixture was sampled, and the content of the polymer block composed of poly($\alpha$-methylstyrene) in the polymer was calculated from the $^1$H-NMR

spectrum. As a result, the content was 35% by mass.

To the obtained mixture, a Ziegler-type hydrogenation catalyst was added, and hydrogenation reaction was carried out under hydrogen atmosphere to obtain an $(S_0)$-(T) type diblock polymer $(A_0)$ having a polymer block composed of poly($\alpha$-methylstyrene) (polymer block $(S_0)$) and a polymer block composed of hydrogenated polybutadiene (polymer block (T)) (hereinafter referred to as "diblock polymer $(A_0$-2)"). The obtained diblock polymer $(A_0$-2) was subjected to GPC measurement. The results were as follows: Mt=160,000, Mn=156,000, Mw=158,000, and Mw/Mn=1.01. The hydrogenation rate calculated from the $^1$H-NMR spectrum was 99%.

(2) Production of Diblock Polymer (A-2)

In a glass reaction vessel equipped with a stirrer wherein the atmosphere in the system was replaced with nitrogen, 300g of the diblock polymer $(A_0$-2) and 4302 mL of methylene chloride were placed, and the resulting mixture was stirred at 25°C for 15 hours to provide a solution. Thereafter, 62.66 mL of acetic anhydride was added thereto, and then 28.02 mL of concentrated sulfuric acid was added dropwise thereto while the liquid temperature in the reaction vessel was kept at 25 to 30°C. The resulting mixture was stirred at 25°C for 20 hours, and 4302 mL of distilled water was added thereto to allow precipitation of solids, followed by separating the solids by filtration. To the solids, 1500 mL of distilled water was added, and the resulting mixture was stirred/washed at 25°C for 30 minutes, followed by separation by filtration. This operation of stirring/washing and separation by filtration was repeated until no pH change was found in the filtrate, and the solids separated by the filtration were dried to obtain a diblock polymer (A) (hereinafter referred to as diblock polymer (A-2)). The rate of introduction of sulfonic acid groups to the structural unit derived from $\alpha$-methylstyrene in the diblock polymer (A-2) (sulfonation rate) as calculated from the $^1$H-NMR spectrum was 41 mol%. The ion exchange capacity was 1.1 meq/g.

(Production Example 3)

(1) Production of Diblock Polymer $(A_0'$-1)

A polymer block composed of polystyrene was formed in the same manner as in (1) in Production Example 1 except that the amount of the *sec*-butyllithium solution (solution in 1.3 M cyclohexane) was 8.5 mL instead of 4.2 mL. The reaction liquid was sampled, and Mn of the polymer block was measured. As a result, Mn was 16,900, and the polymerization conversion rate of styrene as determined by gas chromatography was 100%.

Subsequently, isoprene was polymerized in the same manner as in (1) in Production Example 1, and a mixture containing a diblock polymer of a polymer block composed of polystyrene and a polymer block composed of polyisoprene was obtained. The mixture was sampled, and the content of the polymer block composed of polystyrene in the polymer was calculated from the $^1$H-NMR spectrum. As a result, the content was 35% by mass.

Using the obtained mixture, in the same manner as in (1) in Production Example 1, a diblock polymer (hereinafter referred to as "diblock polymer $(A_0'$-1)") of a polymer block composed of polystyrene (polymer block $(S_0)$) and a polymer block composed of hydrogenated polyisoprene (polymer block (T)) was obtained. The obtained diblock polymer $(A_0'$-1) was subjected to GPC measurement. The results were as follows: Mt=67,500, Mn=65,200, Mw=67,100, and Mw/Mn=1.03. The hydrogenation rate calculated from the $^1$H-NMR spectrum was 98.1%.

(2) Production of Diblock Polymer (A'-1)

A diblock polymer containing a sulfonic acid group (hereinafter referred to as "diblock polymer (A'-1)") was obtained in the same manner as in (2) in Production Example 1 except that the diblock polymer $(A_0'$-1) was used instead of the diblock polymer $(A_0$-1). The rate of introduction of sulfonic acid groups to the structural unit derived from styrene in the diblock polymer (A'-1) (sulfonation rate) as calculated from the $^1$H-NMR spectrum was 34 mol%. The ion exchange capacity was 1.1 meq/g.

(Production Example 4)

(1) Production of Triblock Polymer $(E_0$-1)

In a pressure vessel equipped with a stirrer whose atmosphere was replaced with nitrogen, 90.9 g of $\alpha$-methylstyrene, 138 g of cyclohexane, 15.2 g of methylcyclohexane, and 3.1 g of tetrahydrofuran were placed, and the resulting mixture was mixed by stirring. To this mixture, 5.5 mL of a sec-butyllithium solution (solution in 1.3 M cyclohexane) was added, and the resulting mixture was stirred at -10°C for 3 hours to perform polymerization reaction. The reaction liquid was sampled, and Mn of the polymer was measured. As a result, Mn was 11,300, and the polymerization conversion rate of α-methylstyrene as determined by gas chromatography was 89%. Subsequently, 23g of butadiene was added to this reaction liquid, and the resulting mixture was stirred for 30 minutes at -10°C to perform further polymerization reaction, followed by adding 930 g of cyclohexane thereto. Subsequently, 141.3 g of butadiene was added to the mixture, and polymerization reaction was carried out at 50°C for 2 hours with stirring.

Thereafter, 7.1 mL of a dichlorodimethylsilane solution (solution in 0.5 M toluene) was added to this reaction liquid, and the resulting mixture was stirred at 50°C for 1 hour to perform coupling reaction, thereby obtaining a mixture containing a triblock polymer in which (poly(α-methylstyrene))-(polybutadiene)-(poly(α-methylstyrene )) are linked to each other in this order. The mixture was sampled, and the content of the polymer block composed of poly(α-methylstyrene) in the polymer was calculated from the $^1$H-NMR spectrum. As a result, the content was 33% by mass.

To the obtained mixture, a Ziegler-type hydrogenation catalyst was added, and hydrogenation reaction was carried out under hydrogen atmosphere to obtain an $(S_0)$-$(T)$-$(S_0)$ type triblock polymer having polymer blocks composed of poly(α-methylstyrene) (polymer blocks $(S_0)$) and a polymer block composed of hydrogenated polybutadiene (polymer block $(T)$) (hereinafter referred to as "triblock polymer $(E_0$-1)"). The obtained triblock polymer $(E_0$-1) was subjected to GPC measurement. The results were as follows: Mt=139,000, Mn=135,000, Mw=137,000, and Mw/Mn=1.01. The hydrogenation rate calculated from the $^1$H-NMR spectrum was 99%.

(2) Production of Triblock Polymer (E-1)

In a glass reaction vessel equipped with a stirrer wherein the atmosphere in the system was replaced with nitrogen, 300g of the triblock polymer $(E_0$-1) and 2038 mL of methylene chloride were placed, and the resulting mixture was stirred at 25°C for 15 hours to provide a solution. Thereafter, 43.51 mL of acetic anhydride was added thereto, and then 19.46 mL of concentrated sulfuric acid was added dropwise thereto while the liquid temperature in the reaction vessel was kept at 25 to 30°C. The resulting mixture was stirred at 25°C for 20 hours, and 2038 mL of distilled water was added thereto to allow precipitation of solids, followed by separating the solids by filtration. To the solids, 1000 mL of distilled water was added, and the resulting mixture was stirred/washed at 25°C for 30 minutes, followed by separation by filtration. This operation of stirring/washing and separation by filtration was repeated until no pH change was found in the filtrate, and the solids separated by the filtration were dried to obtain an (S)-(T)-(S) type triblock polymer having polymer blocks composed of poly(α-methylstyrene) in which sulfonic acid groups are introduced (polymer blocks (S)) and a polymer block composed of hydrogenated polybutadiene (polymer block (T)) (hereinafter referred to as "triblock polymer (E-1)"). The rate of introduction of sulfonic acid groups to the structural unit derived from α-methylstyrene in the triblock polymer (E-1) (sulfonation rate) as calculated from the $^1$H-NMR spectrum was 52.8 mol%. The ion exchange capacity was 1.1 meq/g.

Table 1 shows the diblock polymer $(A_0$-1), the diblock polymer $(A_0$-2), the diblock polymer $(A_0'$-1), and the triblock polymer $(E_0$-1) obtained in Production Examples 1 to 4; Mn of the polymer block $(S_0)$ contained in each of them; the content of the polymer block $(S_0)$; and the ion exchange capacities of the diblock polymer (A-1), the diblock polymer (A-2), the diblock polymer (A'-1), and the triblock polymer (E-1).

[Table 1]

| | | Polymer block $(S_0)$ | | Whole polymer | Ion exchange capacity (meq/g) |
| --- | --- | --- | --- | --- | --- |
| | | Mn | Content (mass%) | Mn | |
| Production Example 1 | Diblock polymer $(A_0$-1) | 34200 | 35 | 132000 | |
| | Diblock polymer (A-1) | | | | 1.1 |
| Production Example 2 | Diblock polymer $(A_0$-2) | 34000 | 35 | 135000 | |
| | Diblock polymer (A-2) | | | | 1.1 |

(continued)

| | | Polymer block ($S_0$) | | Whole polymer | Ion exchange capacity (meq/g) |
|---|---|---|---|---|---|
| | | Mn | Content (mass%) | Mn | |
| Production Example 3 | Diblock polymer ($A_0$'-1) | 16900 | 35 | 65200 | |
| | Diblock polymer (A'-1) | | | | 1.1 |
| Production Example 4 | Triblock polymer ($E_0$-1) | 11300 ($\times$2 blocks) | 33 | 135000 | |
| | Triblock polymer (E-1) | | | | 1.1 |

(Example 1)

A solution was prepared by mixing 19.5 g of the diblock polymer (A-1), 28.6 g of diisopropylbenzene (manufactured by Mitsui Chemicals, Inc.; p-isomer content, not less than 95%) as the hydrocarbon solvent (B), and 66.6 g of 1-hexanol as the organic solvent (C). Subsequently, 4.3 g of carbon black (manufactured by Lion Corporation; Ketjenblack EC600JD; primary particle size, 34 nm) as a conductive filler (D) was added to the solution, and the resulting mixture was subjected to dispersion treatment using a precision dispersion/emulsification machine ("Cleamix CLM-0.8S", manufactured by M Technique Co., Ltd.) at a rotor speed of 4500 rpm for 30 minutes, to prepare a composition (Composition 1).

(Example 2)

A composition (Composition 2) was prepared in the same manner as in Example 1 except that 19.5 g of the diblock polymer (A-2) was used instead of 19.5 g of the diblock polymer (A-1).

(Comparative Example 1)

A composition (Composition 3) was prepared in the same manner as in Example 1 except that 19.5 g of the diblock polymer (A'-1) was used instead of 19.5 g of the diblock polymer (A-1).

(Comparative Example 2)

A composition (Composition 4) was prepared in the same manner as in Example 1 except that 19.5 g of the triblock polymer (E-1) was used instead of 19.5 g of the diblock polymer (A-1).
Table 2 shows the compositions produced in Examples and Comparative Examples.

[Table 2]

| | Diblock polymer (A-1) (mass%) | Diblock polymer (A-2) (mass%) | Diblock polymer (A'-1) (mass%) | Triblock polymer (E-1) (mass%) | Hydrocarbon solvent (B) (mass%) | Organic solvent (C) (mass%) | Conductive filler (D) (mass%) |
|---|---|---|---|---|---|---|---|
| Example 1 | 16.4 | | | | 24.0 | 56.0 | 3.6 |
| Example 2 | | 16.4 | | | 24.0 | 56.0 | 3.6 |
| Comparative Example 1 | | | 16.4 | | 24.0 | 56.0 | 3.6 |

(continued)

|  | Diblock polymer (A-1) (mass%) | Diblock polymer (A-2) (mass%) | Diblock polymer (A'- 1) (mass%) | Triblock polymer (E-1) (mass%) | Hydrocarbon solvent (B) (mass%) | Organic solvent (C) (mass%) | Conductive filler (D) (mass%) |
|---|---|---|---|---|---|---|---|
| Comparative Example 2 |  |  |  | 16.4 | 24.0 | 56.0 | 3.6 |

[Evaluation of Compositions]

(Production of Sensors)

Using the compositions obtained in Examples and Comparative Examples (Compositions 1 to 4), electrode films were produced, and sensors were produced using those electrode films. The details are described below.

A commercially available silver paste (manufactured by Fujikura Kasei Co., Ltd., DOTITE XA-954) was printed on an elastomer film (manufactured by Kuraray Co., Ltd.; SEPTON film) using a screen printer (manufactured by Newlong Seimitsu Kogyo Co., Ltd.; LS-34TV), to form a collecting electrode layer. Subsequently, each of the compositions obtained in Examples and Comparative Examples was printed on the collecting electrode layer using the screen printer (manufactured by Newlong Seimitsu Kogyo Co., Ltd.; LS-34TV), and dried at 80°C for 5 minutes. On the surface of the printed/dried composition, the printing and the drying were further repeated to achieve a thickness of 100 $\mu$m. The composition was further dried at 80°C for 2 hours to form a laminate of a collecting electrode layer and an electrode film. In the printing of the composition, no defect such as clogging of the screen plate or blur on the printing surface occurred, and favorable printing properties could be obtained.

A polymer electrolyte solution prepared by the same operation as in Comparative Example 2 except that carbon black was not used was printed on the electrode-film side of the laminate using the screen printer (manufactured by Newlong Seimitsu Kogyo Co., Ltd.; LS-34TV), and dried at 80°C to form a polymer electrolyte layer. On the polymer electrolyte layer, the polymer electrolyte solution was further printed using the screen printer (manufactured by Newlong Seimitsu Kogyo Co., Ltd.; LS-34TV), and dried. The printing and the drying of the polymer electrolyte solution was repeated to achieve a thickness of the polymer electrolyte layer of 15 $\mu$m, to obtain a laminate composed of the polymer electrolyte layer, the electrode film, and the collecting electrode layer.

Two sheets of the laminate obtained were stacked on each other such that their polymer electrolyte layers faced each other, and heat press was carried out at 120°C for 5 minutes at 0.49 MPa, to obtain a laminate in which the collecting electrode layer, the electrode film, the polymer electrolyte film, the electrode film, and the collecting electrode layer are laminated in this order. Subsequently, a lead wire was connected to each of the pair of collecting electrode layers, to provide a sensor. All sensors obtained were flexible.

In the case where Composition 3 was used, deformation of the electrode films occurred during the heat press, causing protrusion of the electrode films from the rim of the polymer electrolyte film layer. Even by use of different conditions in the heat press in the production of the sensor, this problem could not be solved. Thus, since the electrode films using Composition 3 may easily cause short-circuit between the electrode films due to deformation of the electrode films caused by external pressure or the like during storage of the sensor, those electrode films were judged not to be useful for the sensor.

(Performance Test of Sensors)

Each of the sensors having the electrode films produced using Composition 1, 2, or 4 was evaluated for its signal intensity.

One end of the laminate of the sensor was fixed, and the lead wires connected to the collecting electrodes were connected to a voltmeter (manufactured by Keyence Corporation; NR-ST04). The position 5 mm distant from the end at which the sensor was fixed was displaced for 1 mm using a displacement generator, and the sensor was kept in this state for 20 seconds. The voltage value of the electric signal output in this test was measured to obtain the signal intensity.

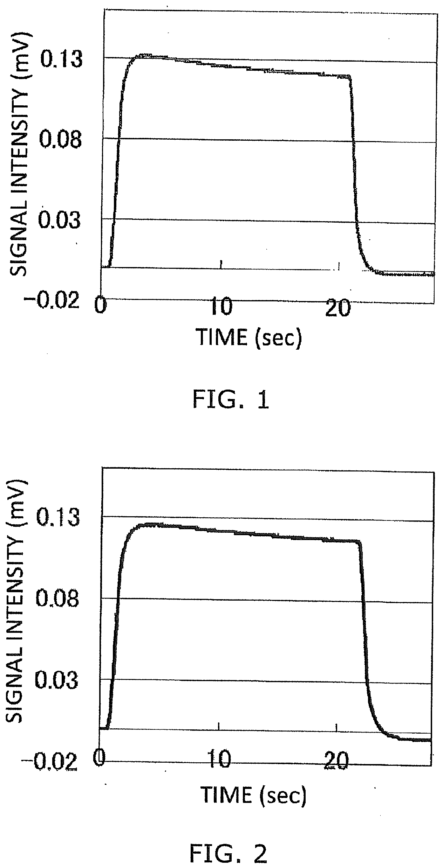

The results of measurement of the signal intensities of the sensors are shown in Figs. 1 to 3.

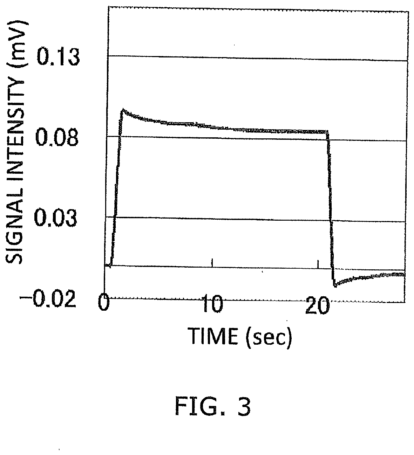

As can be seen by comparison between Fig. 1 and Fig. 3, due to the displacement of the sensor, the sensor having the electrode films produced using the composition obtained in Example 1 showed a signal intensity value about 1.4 times larger than the signal intensity value obtained with the sensor having the electrode films produced using the composition obtained in Comparative Example 2.

As can be seen by comparison between Fig. 2 and Fig. 3, the sensor having the electrode films produced using the composition obtained in Example 2 showed a signal intensity value about 1.3 times larger than the signal intensity value obtained with the sensor having the electrode films produced using the composition obtained in Comparative Example 2.

From these results, it can be seen that a sensor having electrode films produced using a composition of the present invention shows a high signal intensity.

**Claims**

1. A composition comprising:

   a diblock polymer (A) having a structure in which, in a diblock polymer ($A_0$) having no ion-conducting group composed of a polymer block ($S_0$) containing a structural unit derived from an aromatic vinyl compound having a number average molecular weight of not less than 20,000 and an amorphous polymer block (T) containing a structural unit derived from an unsaturated aliphatic hydrocarbon, an ion-conducting group(s) is/are introduced to said polymer block ($S_0$);
   a hydrocarbon solvent (B);
   an organic solvent (C) having at least one functional group selected from the group consisting of hydroxyl, carbonyl, alkoxycarbonyl, and amide; and
   a conductive filler (D).

2. The composition according to claim 1, wherein the content of said polymer block ($S_0$) in said diblock polymer ($A_0$) is within the range of 20 to 70% by mass.

**Patentansprüche**

1. Eine Zusammensetzung, umfassend:

   ein Diblockpolymer (A) mit einer Struktur, in welche in einem Diblockpolymer ($A_0$), das keine ionenleitende Gruppe enthält, zusammengesetzt aus einem Polymerblock ($S_0$), der eine Struktureinheit enthält, die von einer aromatischen Vinylverbindung mit einem Zahlenmittel des Molekulargewichts von nicht weniger als 20.000 abgeleitet ist, und einem amorphen Polymerblock (T), der eine Struktureinheit enthält, die von einem ungesättigten aliphatischen Kohlenwasserstoff abgeleitet ist, (eine) ionenleitende Gruppe(n) in den Polymerblock ($S_0$) eingeführt ist/sind;
   ein Kohlenwasserstofflösungsmittel (B);
   ein organisches Lösungsmittel (C) mit mindestens einer funktionellen Gruppe, ausgewählt aus der Gruppe bestehend aus Hydroxyl, Carbonyl, Alkoxycarbonyl und Amid; und
   einen leitfähigen Füllstoff (D).

2. Die Zusammensetzung gemäß Anspruch 1, wobei der Anteil des Polymerblocks ($S_0$) in dem Diblockpolymer ($A_0$) im Bereich von 20 bis 70 Massen-% liegt.

**Revendications**

1. Composition comprenant :

   un polymère diséquencé (A) ayant une structure dans laquelle, dans un polymère diséquencé ($A_0$) n'ayant pas de groupe conducteur d'ions se composant d'une séquence polymère ($S_0$) contenant un motif structurel dérivé d'un composé vinylique aromatique ayant un poids moléculaire moyen en nombre non inférieur à 20 000 et d'une séquence polymère amorphe (T) contenant un motif structurel dérivé d'un hydrocarbure aliphatique non saturé, un ou plusieurs groupes conducteurs d'ions sont introduits dans ladite séquence polymère ($S_0$) ;
   un solvant hydrocarboné (B) ;
   un solvant organique (C) ayant au moins un groupe fonctionnel choisi dans le groupe constitué par les groupes hydroxyle, carbonyle, alcoxycarbonyle et amide ; et
   une matière de remplissage conductrice (D).

2. Composition selon la revendication 1, dans laquelle la teneur en ladite séquence polymère $(S_0)$ dans ledit polymère diséquencé $(A_0)$ est comprise dans la plage allant de 20 à 70 % en masse.

FIG. 1

FIG. 2

FIG. 3

**REFERENCES CITED IN THE DESCRIPTION**

**Patent documents cited in the description**

- JP 2012069416 A

**Non-patent literature cited in the description**

- *Macromol. Chem., Macromol. Symp.,* 1990, vol. 32 (119